# EUROPEAN PATENT APPLICATION

(11) **EP 2 595 274 A1**
(43) Date of publication of application: **22.05.2013**
(21) Application number: 11189711.2
(22) Date of filing: 18.11.2011
(51) Int. Cl.: H02J 7/02

(54) **Method and system for inductively charging an electronic device**

(71) Applicant: Research In Motion Limited, Waterloo, ON N2L 3W8 (CA)
(72) Inventor: Winger, Llyall Kenneth, Waterloo, Ontario N2L 3W8 (CA); Bao, Cheng, Waterloo, Ontario N2L 3W8 (CA); Bernard, Christopher David, Waterloo, Ontario N2L 3W8 (CA)
(74) Representative: Moore, Barry

(57) **Abstract**

An apparatus and method for inductively charging an electronic device are disclosed herein. The apparatus comprises a transmitter coil and a controller. The transmitter coil includes a configurable inductive portion. The controller is configured to receive configuration information that is indicative of a receiver coil configuration in the electronic device. Based on the received configuration information, the controller configures the transmitter coil to form an active coil to substantially match the configuration of the receiver coil.

## Description

### TECHNICAL FIELD

The present application relates to apparatuses and methods for inductively charging electronic devices.

### BACKGROUND DISCUSSION

Electronic devices often are powered by rechargeable batteries. This is especially the case for portable electronic devices. The batteries in such devices are generally recharged from time to time to allow use of the device without a wired power connection.

Traditionally, electronic devices have been recharged using a charger that is coupled to a wall socket and physically connected to the electronic device as well. More recently, inductive chargers have been developed for electronic devices. The use of an inductive charger does not generally require a physical connection to the electronic device that is being recharged. For reasons such as this, the use of an inductive charger can, in some instances, be more convenient than a wired charger.

### BRIEF DESCRIPTION OF THE DRAWINGS

Embodiments of the present application will now be described, by way of example only, with reference to the attached Figures, wherein:
Figure 1 is a block diagram of an exemplary embodiment of a portable electronic device;
Figure 2 is an exemplary block diagram of a communication subsystem component of Figure 1;
Figure 3 is a block diagram of an exemplary implementation of a node of a wireless network;
Figure 4 is a block diagram illustrating components of an exemplary configuration of a host system that the portable electronic device can communicate with;
Figure 5 is a block diagram of an inductive charger according to various embodiments;
Figure 6 is a schematic diagram of the charger of Figure 5 according to an embodiment;
Figure 7 is a schematic diagram of transmitter coils according to various embodiments; and
Figure 8 is a flow chart diagram of a method of charging a device according to an embodiment.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

In a first aspect, there is provided herein an apparatus for inductively charging an electronic device. The apparatus comprises a transmitter coil, including a configurable inductive portion; a controller configured to receive configuration information indicative of a receiver coil configuration in the electronic device and to adaptively configure the transmitter coil to form an active coil to substantially match the configuration of the receiver coil based on the received configuration information.

In some embodiments, the configurable inductive portion comprises a first inductive portion and a second inductive portion; and the apparatus further comprises a first switch for alternately including and omitting the second inductive portion from the active coil based on the receiver coil configuration.

In some embodiments, the controller is coupled to the first switch for controlling the operation of the first switch based on the receiver coil configuration.

In various embodiments, the transmitter coil further comprises a third inductive portion; and the apparatus further comprises a second switch for alternately including and omitting the third inductive portion from the active coil based on the receiver coil configuration.

In various embodiments, the apparatus further comprises: a communication module for receiving a message including the configuration information indicative of the receiver coil configuration, the communication module coupled to the controller. In some such embodiments, the controller controls the switch based on the received message.

In some embodiments, the communication module is coupled to the transmitter coil; and the message is received through the transmitter coil.

In various embodiments, the configurable inductive portion of the transmitter coil includes first and second configuration terminals, and the apparatus further comprises: a power driver, the power driver having first and second power terminals, the first and second power terminals being coupled to the first and second configuration terminals of the configurable inductive portion of the transmitter coil.

In some embodiments, the apparatus further comprises: a power driver, the power driver having a first terminal and a second terminal. In some such embodiments, the first inductive portion has a first inductive portion terminal end and a first inductive portion switch end, the first inductive portion terminal end coupled to the first terminal and the first inductive portion switch end coupled to the first switch; and the second inductive portion has a second inductive portion switch end and a second inductive portion terminal end, the second inductive portion switch end coupled to the first switch and the second inductive portion terminal end coupled to the second terminal; and the first switch alternately couples and decouples the first inductive portion and the second terminal or the first inductive portion and the second inductive portion.

In another aspect, there is provided a charger for inductively charging a hand held device. The charger comprises a transmitter coil comprising a first inductive portion and a second inductive portion; a controller configured to receive configuration information indicative of a receiver coil configuration in the hand held device and to adaptively configure the transmitter coil to form an active coil to substantially match the configuration of the receiver coil based on the received configuration information.

In some embodiments, the charger further comprises a first switch for alternately including and omitting the second inductive portion from the active coil based on the receiver coil configuration.

In some embodiments, the controller is coupled to the first switch for controlling the operation of the first switch based on the receiver coil configuration.

In some embodiments, the transmitter coil further comprises a third inductive portion; and the charger further comprises a second switch for alternately including and omitting the third inductive portion from the active coil based on the receiver coil configuration.

In some embodiments, the charger further comprises: a communication module for receiving a message including the configuration information indicative of the receiver coil configuration, the communication module coupled to the controller. In some such embodiments, the controller controls the switch based on the received message.

In some embodiments, the communication module is coupled to the transmitter coil; and the message is received through the transmitter coil.

In some embodiments, the transmitter coil includes first and second configuration terminals, and the charger further comprises: a power driver, the power driver having first and second power terminals, the first and second power terminals being coupled to the first and second configuration terminals of the transmitter coil.

In some embodiments, the charger further comprises: a power driver, the power driver having a first terminal and a second terminal; and the first inductive portion has a first inductive portion terminal end and a first inductive portion switch end, the first inductive portion terminal end coupled to the first terminal and the first inductive portion switch end coupled to the first switch; and the second inductive portion has a second inductive portion switch end and a second inductive portion terminal end, the second inductive portion switch end coupled to the first switch and the second inductive portion terminal end coupled to the second terminal; and the first switch alternately couples and decouples the first inductive portion and the second terminal or the first inductive portion and the second inductive portion.

In yet another aspect, there is provided herein a method for inductively charging an electronic device. The method comprises determining a configuration of a receiver coil in the electronic device; configuring a transmitter coil to form an active coil based on the determined configuration of the receiver coil and providing power to the active coil.

In some embodiments, the transmitter coil comprises a first inductive portion and a second inductive portion; and the method further comprises alternately including and omitting the second inductive portion from the active coil based on the receiver coil configuration.

In some embodiments, the transmitter coil further comprises a third inductive portion; and the method further comprises alternately including and omitting the third inductive portion from the active coil based on the receiver coil configuration.

In some embodiments, the method further comprises: receiving a message from the electronic device including configuration information indicative of the receiver coil configuration; and configuring the transmitter coil based on the message.

In some embodiments, the message is received through the inductive coil.

In some embodiments, the method further comprises: based on the configuration of the receiver coil, forming an active coil by coupling or decoupling the first and second inductive portions.

In some embodiments, the transmitter coil includes first and second configuration terminals and the method further comprises coupling a power driver to the first and second configuration terminals.

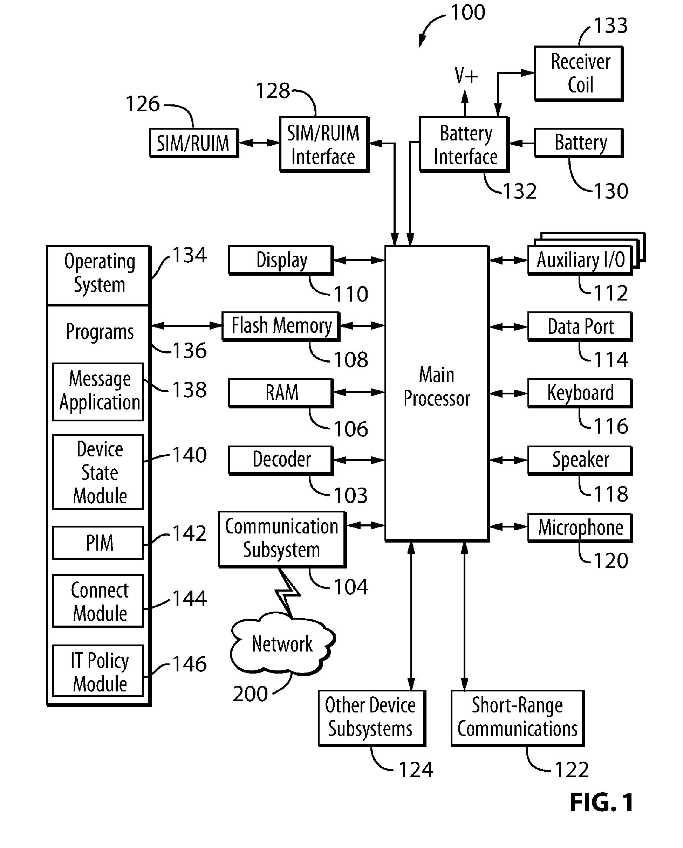

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an exemplary embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this exemplary embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one exemplary implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber identity Module or a Removable User identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. (As used herein, coupling may include electrical coupling, physical coupling, mechanical coupling, or any combination thereof, according to context.) In order to identify the subscriber, the SIM/RUIM card 126 can include some user parameters such as an International Mobile Subscriber identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes a receiver coil 133. Receiver coil 133 is coupled to battery interface 132. Receiver coil 133 can be inductively energized by a transmitter coil of an inductive charging device. The use of an inductive charger allows device 100 to be charged without physically coupling device 100 to an external power source. Inductive charging will be explained in greater detail below.

The portable electronic device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

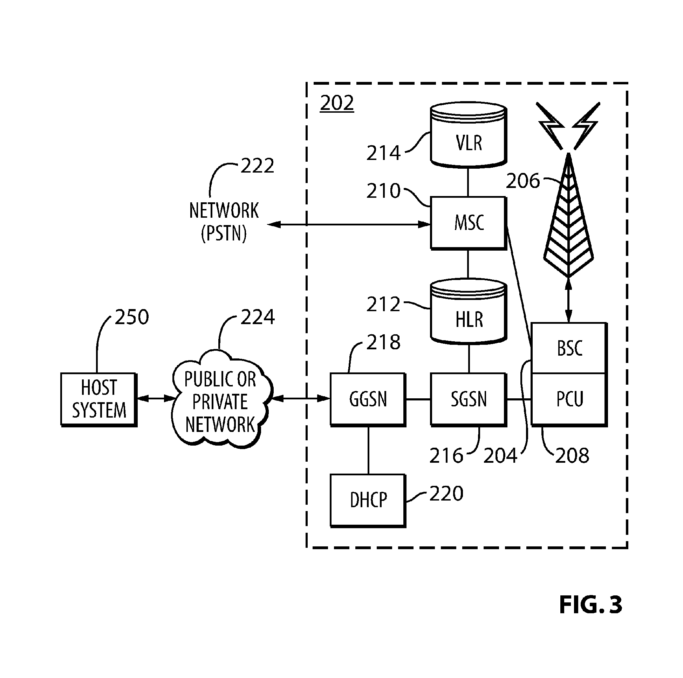

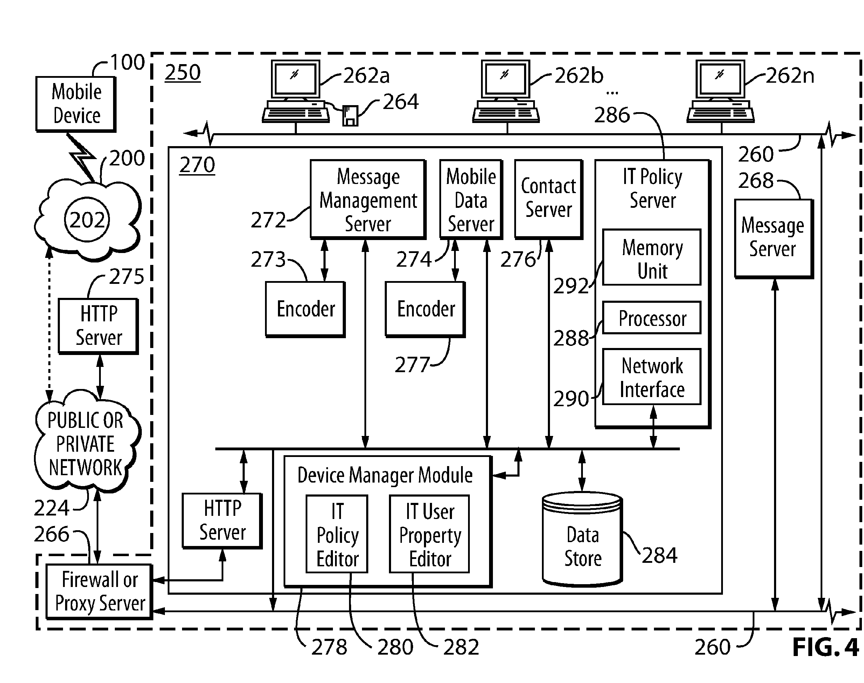

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100 and still others can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

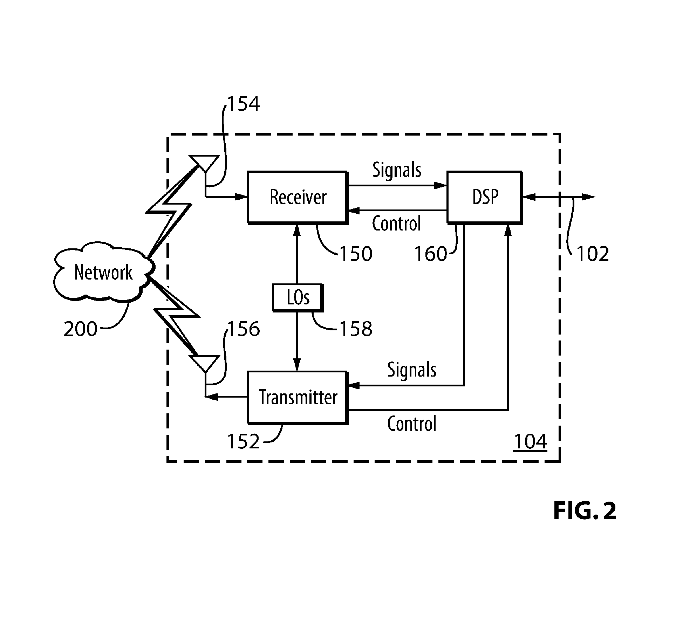

Referring now to Figure 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an exemplary implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the exemplary implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM networks, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an exemplary configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this exemplary configuration. More generally, the host system 250 may represent a smaller part of a larger network (not shown) of the organization, and may comprise different components and/or be arranged in different topologies than that shown in the exemplary embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this exemplary embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™ server, a Novell Groupwise™server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and reroute the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public networks, through HTTP server 275 or other suitable web server such as a File Transfer Protocol (FTP) server, to retrieve HTTP webpages and other data. Requests for webpages are typically routed through M DS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data items of interest to the user, such as, but not limited to, e-mail, contacts, calendar events, voice mails, appointments, and task items. PIM applications include, for example, calendar, address book, tasks and memo applications.

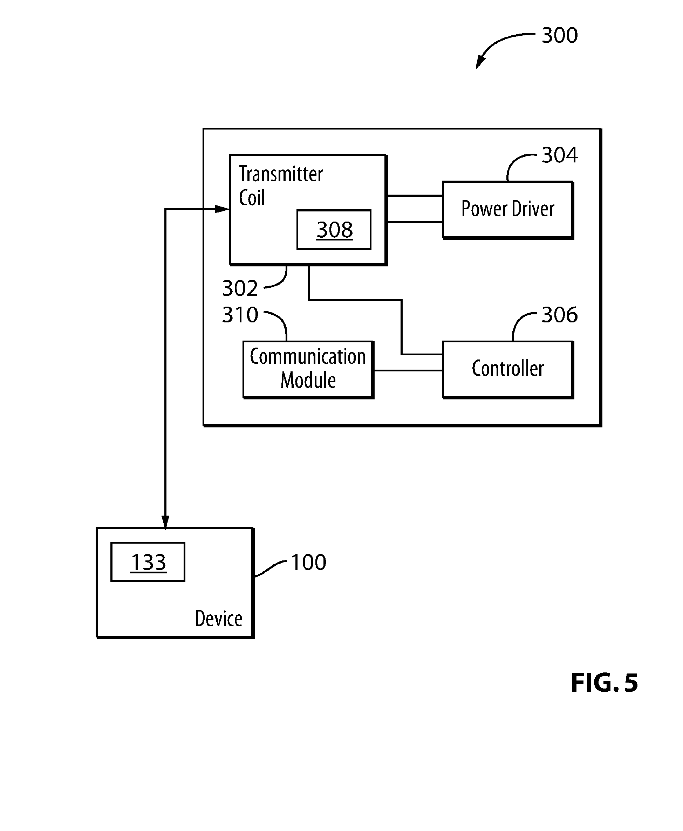

Referring now to Figure 5, illustrated therein is a block diagram of an apparatus, such as an inductive charger, 300 for charging electronic devices such as, for example, device 100. Inductive charger 300 comprises a transmitter coil 302, power driver 304 for energizing transmitter coil 302, and a controller 306. Transmitter coil 302 includes a configurable inductive portion 308 that is used to inductively energize a receiver coil such as for example receiver coil 133 of device 100 and thereby charge battery 130 of device 100. Transmitter coil 302 may also include, but is not required to include, an inductive portion that is not configurable.

Controller 306 receives configuration information that is indicative of the configuration of receiver coil 133. In various embodiments, the term configuration can refer to, but is not limited to, the size of the coil, the shape of the coil, the arrangement of the coil, the number of turns in the coil, the parts of the coil that can carry electric current (be included) or be prevented from carrying electric current (be omitted), the orientation of the coil, or any combination of the size, shape, and any other arrangement of the coil. In some embodiments, parts of the coil are included by coupling the portions of the coil to be included together. Similarly, in some embodiments, parts of the coil are omitted by decoupling them from the active part of coil if they are presently coupled to it or by not coupling them to the active part of coil if they presently not coupled to it. As used herein, decoupling may include electrical decoupling, physical decoupling, mechanical decoupling, or any combination thereof, according to context. In some embodiments, if part A of a coil is decoupled from part B of a coil then parts A and B are isolated from one another.

Based on the received configuration information, controller 306 adaptively configures transmitter coil 302 to form an active coil. The term active coil, as used herein, refers to the portion(s) of transmitter 302 that is (are) utilized to inductively charge a receiver coil. The active coil has its own characteristics and geometry (e.g., size, number of turns) that affect its inductance and its performance. Adaptive configuration can thereby enable the performance of the active coil to change or be adjusted or be tuned or to otherwise be configured as a function of the received configuration information.

In various embodiments, controller 306 forms an active coil from the configurable inductive portion 308 such that the configuration of the active coil substantially (not necessarily exactly) matches that of the receiver coil. Controller 306 can receive the configuration information in any suitable manner. In some embodiments, controller 306 is coupled to a user interface (not illustrated) for receiving input from a user. In such embodiments, the user can select a configuration of the active coil.

By adjusting the configuration of the active coil to substantially match that of receiver coil 133, charger 300 can reduce losses when charging device 100 as compared to the case where the transmitter coil and receiver coil are not matched. Generally speaking, although an exact match is not a necessity, the closer the match, the better the performance may be expected to be. For example, adjusting the configuration of the active coil can include adjusting, the size, shape, and/or arrangement of the active coil. Adjusting can include changing or modifying an existing arrangement, and can also include selecting or setting an arrangement with or without regard to an existing arrangement. In addition, charger 300 can efficiently charge a variety of electronic devices having varying configurations of receiver coils. In particular, charger 300 can adjust the configuration of the active coil to match the configuration of the receiver coil of the particular device that is being charged. By matching the configuration of the transmitter coil 302 to the receiver coil 133, efficiency and performance of the charger with respect to electromagnetic interference (EMI) can be improved. Accordingly, in some embodiments, charger 300 can be utilized to efficiently charge devices having receiver coils of substantially different configurations.

In some embodiments, charger 300 also comprises a communication module 310. Communication module 310 communicates with electronic device 100 to, for example, determine the configuration of receiver coil 133 in device 100. Accordingly, in various embodiments, communication module 310 receives a message for device 100 and the message includes configuration information that is indicative of configuration of receiver coil 133 in device 100. In various embodiments, the message can include any other suitable information such as, for example, but not limited to, the amount of power required by device 100.

Communication module 310 can comprise any appropriate communication technology. In some embodiments, communication module 310 is coupled to transmitter coil 302, and device 100 uses the receiver coil 133 to transmit the message to transmitter coil 302. Accordingly, in such embodiments, communication module 310 is coupled to transmitter coil 302 so that it can receive the message. In some embodiments, electronic device 100 includes an RFID tag that can be read by communication module 310. Communication module 310 then provides the configuration information to controller 306. In some embodiments, controller 306 can receive configuration information from both a user interface and communication module 310.

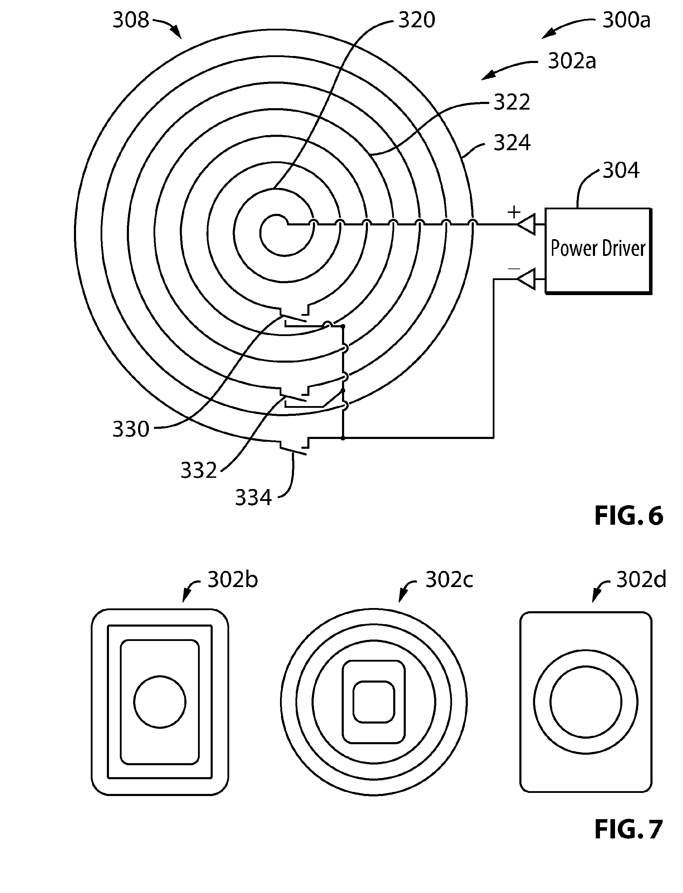

Reference is now made to Figure 6, which illustrates a schematic diagram of an embodiment of charger 300 of Figure 5. In some embodiments, configurable inductive portion 308 of transmitter coil 302 comprises a plurality inductive portions or segments. In the embodiment illustrated in Figure 6 transmitter coil 302 comprises three inductive portions 320, 322 and 324. Although three portions are illustrated, this is an example only and any suitable number of portions or segments can be used.

In various embodiments, controller 306 forms the active coil by including or excluding particular inductive portions from the active coil. In various embodiments, controller 306 achieves this by selecting which portion(s) of transmitter coil are supplied with power from power driver 304. In the embodiment illustrated in Figure 6 the transmitter coil is arranged as a spiral with each inductive portion being a segment of the spiral such that first inductive portion 320 is an inner segment of the coil 302, second inductive portion 322 is a middle segment of coil 302 and third inductive portion 324 is an outer segment of coil 302.

Inductive coil 302 further comprises first switch 330, second switch 332 and third switch 334. Switches 330, 332, and 334 can comprise any appropriate switches such as for example any appropriate transistors including but not limited to metal oxide field effect transistors (MOSFETs). Controller 306 controls the operation of switches 330, 332, and 334 to select a particular combination of inductive portions to be the active coil. Given the particular configuration illustrated in Figure 6, the active coil can be first inductive portion 320, the combination of first and second inductive portions 320 and 322, or the combination of first, second, and third inductive portions 320, 322, and 324. However, as will be understood by those skilled in the art, coil 322 can be modified, by for example, including additional switches and connections, such that the active coil can comprise any combination of inductive portions 320, 322, and 324.

By selecting which portions 320, 322, and 324 form the active coil, controller 306 can adapt the active coil to a variety of sizes of receiver coils. Accordingly, for matching to small receiver coils first inductive portion 320 can be utilized. For matching to middle sized receiver coils, inductive portions 320 and 322 can be utilized. For matching to large receiver coils, inductive portions 320, 322, and 324 can be utilized.

Although Figure 6 illustrates a spiral coil, coil 302 can have any suitable configuration including but not limited to any suitable shape, size, and arrangement. The term arrangement can include but is not limited to the relative placement of the inductive portions of coil 302. For example, various inductive portions can have different shapes. The shapes of the inductive portions can include but are not limited to spiral, circular, oval, wound rectangle, and wound square. In addition, the coil implemented in any appropriate manner, including but not limited to a wire or a trace on a printed circuit board (PCB).

Reference is now made to Figure 7 which illustrates example three example transmitter coils 302b, 302c, and 302d, according to various embodiments. Transmitter coil 302b comprises four inductive portions, including an inner circular inductive portion surrounded by three rectangular inductive portions. Two of the rectangular inductive portions have rounded corners while one has straight corners. Transmitter coil 302c comprises five inductive portions, including an inner square inductive portion surrounded by a rectangular inductive portion, which is in turn surrounded by three circular inductive portions. Transmitter coil 302d comprises three inductive portions, including an inner circular inductive portion, surrounded by another circular inductive portion, which is in turn surrounded by a rectangular inductive portion. In various embodiments, any shape, size, and arrangement can be selected for each of the inductive portions. For example, the inductive portions need not be evenly spaced. In addition, in various embodiments, any suitable number of inductive portions can be utilized.

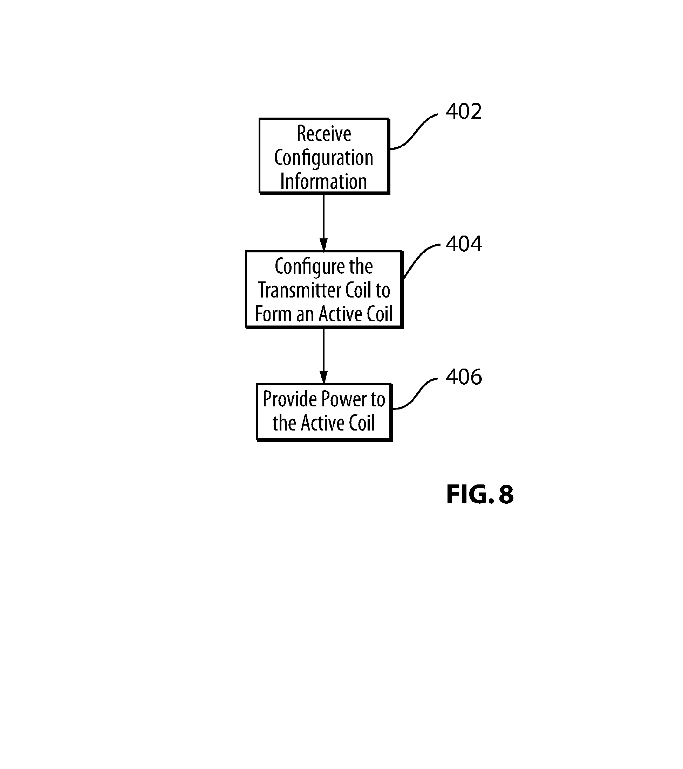

Reference is now made to Figure 8, which is a flowchart diagram illustrating the basic steps involved in charging an electronic device according to an embodiment. At step 402, configuration information indicative of the configuration of a receiver coil is received. At step 404, the transmitter coil is configured to form an active coil to substantially match the configuration of the receiver coil based on the received configuration information. At step 406, the power is provided to the active coil.

While the embodiments described herein are directed to particular implementations of the electronic device and method of controlling the electronic device, the above-described embodiments are intended to be examples. It will be understood that alterations, modifications and variations may be effected without departing from the scope of the present disclosure.

## Claims

1. An apparatus for inductively charging an electronic device, the apparatus comprising:
a transmitter coil including a configurable inductive portion;
a controller configured to receive configuration information indicative of a receiver coil configuration in the electronic device and to adaptively configure the transmitter coil to form an active coil to substantially match the configuration of the receiver coil based on the received configuration information.

2. The apparatus of claim 1, wherein the configurable inductive portion comprises a first inductive portion and a second inductive portion; and
wherein the apparatus further comprises a first switch for alternately including and omitting the second inductive portion from the active coil based on the receiver coil configuration.

3. The apparatus of claim 2, wherein the controller is coupled to the first switch for controlling the operation of the first switch based on the receiver coil configuration.

4. The apparatus of the claim 3, wherein the transmitter coil further comprises a third inductive portion; and
wherein the apparatus further comprises a second switch for alternately including and omitting the third inductive portion from the active coil based on the receiver coil configuration.

5. The apparatus of claim 3 or 4, further comprising:
a communication module for receiving a message including the configuration information indicative of the receiver coil configuration, the communication module coupled to the controller;
wherein the controller controls the switch based on the received message.

6. The apparatus of claim 5, wherein the communication module is coupled to the transmitter coil; and
wherein the message is received through the transmitter coil.

7. The apparatus of any preceding claim, wherein the configurable inductive portion of the transmitter coil includes first and second configuration terminals, and further comprising:
a power driver, the power driver having first and second power terminals, the first and second power terminals being coupled to the first and second configuration terminals of the configurable inductive portion of the transmitter coil.

8. The apparatus of claim 2, further comprising:
a power driver, the power driver having a first terminal and a second terminal;
wherein the first inductive portion has a first inductive portion terminal end and a first inductive portion switch end, the first inductive portion terminal end coupled to the first terminal and the first inductive portion switch end coupled to the first switch;
wherein the second inductive portion has a second inductive portion switch end and a second inductive portion terminal end, the second inductive portion switch end coupled to the first switch and the second inductive portion terminal end coupled to the second terminal; and
wherein the first switch alternately couples and decouples the first inductive portion and the second terminal or the first inductive portion and the second inductive portion.

9. A method for inductively charging a electronic device, the method comprising:
receiving configuration information indicative of a receiver coil configuration in the electronic device;
configuring a transmitter coil to form an active coil based on the received configuration of the receiver coil; and
providing power to the active coil.

10. The method of claim 9, wherein the transmitter coil comprises a first inductive portion and a second inductive portion; and
wherein the method further comprises alternately including and omitting the second inductive portion from the active coil based on the receiver coil configuration.

11. The method of claim 10, wherein the transmitter coil further comprises a third inductive portion; and
wherein the method further comprises alternately including and omitting the third inductive portion from the active coil based on the receiver coil configuration.

12. The method of claim 10 or 11, further comprising:
receiving a message from the electronic device including configuration information indicative of the receiver coil configuration; and
configuring the transmitter coil based on the message.

13. The method of claim 12, wherein the message is received through the inductive coil.

14. The method of claim any one of claims 10 to 13, further comprising:
based on the configuration of the receiver coil, forming an active coil by coupling or
decoupling the first and second inductive portions.

15. A charger for inductively charging a hand held device, the charger comprising:
a transmitter coil comprising a first inductive portion and a second inductive portion;
a controller configured to receive configuration information indicative of a receiver coil configuration in the hand held device and to adaptively configure the transmitter coil to form an active coil to substantially match the configuration of the receiver coil based on the received configuration information.

## Amended claims

### Amended claims in accordance with Rule 137(2) EPC.

**1.** An apparatus for (300) inductively charging an electronic device (100), the apparatus comprising:
a transmitter coil (302) including a configurable inductive portion (308);
a controller (306) configured to receive configuration information indicative of a receiver coil (133) configuration in the electronic device (100) and to adaptively configure the transmitter coil (302) to form an active coil to substantially match the configuration of the receiver coil (133) based on the received configuration information.

**2.** The apparatus of claim 1, wherein the configurable inductive portion (308) comprises a first inductive portion (320) and a second inductive portion (322); and
wherein the apparatus (300) further comprises a first switch (330) for alternately including and omitting the second inductive portion (322) from the active coil based on the receiver coil configuration.

**3.** The apparatus of claim 2, wherein the controller (306) is coupled to the first switch (330) for controlling the operation of the first switch (330) based on the receiver coil configuration.

**4.** The apparatus of the claim 3, wherein the transmitter coil further comprises a third inductive portion (324); and
wherein the apparatus (300) further comprises a second switch (332) for alternately including and omitting the third inductive (324) portion from the active coil based on the receiver coil configuration.

**5.** The apparatus of claim 3 or 4, further comprising:
a communication module (310) for receiving a message including the configuration information indicative of the receiver coil configuration, the communication module coupled to the controller (306);
wherein the controller (306) controls the switch based on the received message.

**6.** The apparatus of claim 5, wherein the communication module (310) is coupled to the transmitter coil (302); and
wherein the message is received through the transmitter coil (302).

**7.** The apparatus of any preceding claim, wherein the configurable inductive portion (308) of the transmitter coil (302) includes first and second configuration terminals, and further comprising:
a power driver (304), the power driver having first and second power terminals, the first and second power terminals being coupled to the first and second configuration terminals of the configurable inductive portion of the transmitter coil (302).

**8.** The apparatus of claim 2, further comprising:
a power driver (304), the power driver having a first terminal and a second terminal;
wherein the first inductive portion (320) has a first inductive portion terminal end and a first inductive portion switch end, the first inductive portion terminal end coupled to the first terminal and the first inductive portion switch end coupled to the first switch (330);
wherein the second inductive portion (322) has a second inductive portion switch end and a second inductive portion terminal end, the second inductive portion switch end coupled to the first switch (330) and the second inductive portion terminal end coupled to the second terminal; and
wherein the first switch (330) alternately couples and decouples the first inductive portion (320) and the second terminal or the first inductive portion (320) and the second inductive portion (330).

**9.** A method for inductively charging a electronic device (100), the method comprising:
receiving configuration information indicative of a receiver coil (133) configuration in the electronic device (100);
configuring a transmitter coil (302) to form an active coil to substantially match the configuration of the receiver coil (133) based on the received configuration information; and
providing power to the active coil.

**10.** The method of claim 9, wherein the transmitter coil (302) comprises a first inductive portion (320) and a second inductive portion (322); and
wherein the method further comprises alternately including and omitting the second inductive portion (322) from the active coil based on the receiver coil configuration.

**11.** The method of claim 10, wherein the transmitter coil (302) further comprises a third inductive portion (324); and
wherein the method further comprises alternately including and omitting the third inductive portion (324) from the active coil based on the receiver coil configuration.

**12.** The method of claim 10 or 11, further comprising:
receiving a message from the electronic device (100) including configuration information indicative of the receiver coil (133) configuration; and
configuring the transmitter coil (302) based on the message.

**13.** The method of claim 12, wherein the message is received through the inductive coil (302).

**14.** The method of claim any one of claims 10 to 13, further comprising:
based on the configuration of the receiver coil (133), forming an active coil by coupling or decoupling the first (320) and second (322) inductive portions.

**15.** A charger for inductively charging a hand held device (100), the charger comprising:
a transmitter coil (302) comprising a first inductive portion and a second inductive portion;
a controller configured (306) to receive configuration information indicative of a receiver coil (133) configuration in the hand held device (100) and to adaptively configure the transmitter coil (302) to form an active coil to substantially match the configuration of the receiver coil (133) based on the received configuration information.
